# EUROPÄISCHE PATENTSCHRIFT

(11) **EP 0 324 135 B1**
(45) Veröffentlichungstag und Bekanntmachung des Hinweises auf die Patenterteilung: **07.04.1993**
(21) Anmeldenummer: 88121269.0
(22) Anmeldetag: 20.12.1988
(51) Int. Cl.: C08J 3/02, C08L 27/18, D01F 6/32, D01F 6/30, C08L 23/08

(54) **Lösungen von Copolymeren des Typs Tetrafluorethylen/Ethylen**
Solutions of copolymers of the type of tetrafluorethylen and ethylene
Solutions de copolymères du type d'éthylène et de tétrafluoréthylène

(30) Priorität: 29.12.1987 DE 3744392
(43) Veröffentlichungstag der Anmeldung: 19.07.1989
(73) Patentinhaber: HOECHST AKTIENGESELLSCHAFT, 65926 Frankfurt am Main (DE)
(72) Erfinder: Blickle, Peter, Dr., D-6233 Kelkheim (Taunus) (DE); Gundert, Friedhelm, Dr., D-6237 Liederbach (DE); Hintzer, Klaus, Dr., D-8269 Burgkirchen (DE); Löhr, Gernot, Dr., D-8269 Burgkirchen (DE); Schwertfeger, Werner, Dr., D-6306 Langgöns (DE)

(56) Entgegenhaltungen:
- GB-A- 856 374
- US-A- 3 352 811
- US-A- 4 266 036

## Beschreibung

Die Erfindung betrifft Lösungen von Copolymeren, bestehend aus
a) höchstens 60 Mol-% an copolymerisierten Einheiten des Tetrafluorethylens,
b) 60 bis 40 Mol-% an copolymerisierten Einheiten des Ethylens und
c) 0 bis 15 Mol-% an copolymerisierten Einheiten mindestens eines weiteren α-olefinischen Comonomeren, ausgewählt aus den folgenden Gruppen:
   c₁) perfluorierte Olefine der Formel CF₂=CF-Rf1, worin Rf1 ein Perfluoralkylrest mit 1 bis 10 C-Atomen ist;
   c₂) perfluorierte Vinylether der Formel CF₂=CF-O-Rf2, worin Rf2 ein Perfluoralkylrest mit 1 bis 10 C-Atomen ist;
   c₃) perfluorierte Vinylether der Formel 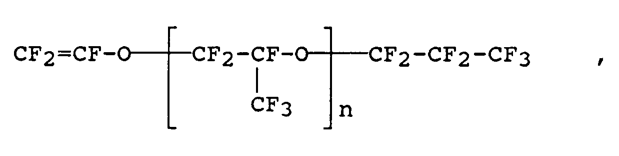 worin n = 1 bis 4 ist;
   c₄) perfluorierte Vinylether der Formel 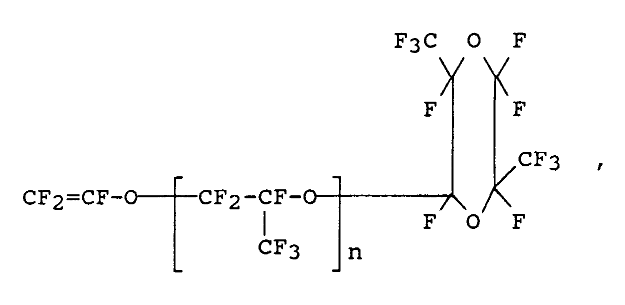 worin n = 0 bis 1 ist;
   c₅) Perfluor-2-methylen-4-methyl-1,3-dioxolan;
   c₆) perfluoralkylsubstituierte Vinylverbindungen der Formel CH₂=CH-Rf3, worin Rf3 ein Perfluoralkylrest mit 2 bis 10 C-Atomen ist;
   c₇) fluorhaltige Olefine der Formel CH₂=CRf4-Rf3, worin Rf4 = F oder CF₃ und Rf3 ein Perfluoralkylrest mit 1 bis 10 C-Atomen ist;
   c₈) 1,1,1-Trifluor-2-(trifluormethyl)-4-penten-2-ol 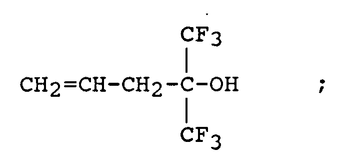
   c₉) Allyl-1-hydroxy-hexafluorisopropylether 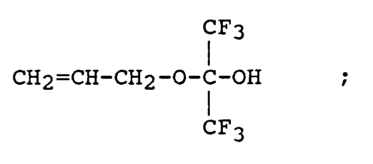
   c₁₀) Verbindungen der allgemeinen Formel CH₂=CH-(CH₂)ₙ-O-CF₂-CFX₃H, worin X₃ = F, Cl oder Trifluormethyl und n Null oder 1 ist;
   c₁₁) α-Olefine mit 3 bis 4 C-Atomen;
   c₁₂) Vinylidenfluorid und
   c₁₃) Trifluorchlorethylen,
   in hochsiedenden Lösungsmitteln. Solche Copolymere werden im folgenden als Copolymere des Typs TFE/E bezeichnet.

Im Gegensatz zum Polytetrafluorethylen können Copolymere dieses Typs aus der Schmelze zu Formkörpern verarbeitet werden. Diese Copolymeren teilen jedoch mit dem Polytetrafluorethylen die Resistenz gegen Chemikalien und Lösungsmittel. Es ist daher kein Lösungsmittel bekannt, das Copolymere vom Typ TFE/E unterhalb von 200 °C in nennenswertem Umfang zu lösen vermag. Aber auch für den Bereich von 200 °C aufwärts ist die Zahl der verfügbaren Lösungsmittel sehr gering. Sie beschränkt sich auf hochsiedende Ester von Carbonsäuren und Dicarbonsäuren und auf hochsiedende cyclische und aromatische Ketone. Solche Lösungen sind bekannt aus den US-Patentschriften 2 412 960, 2 448 952 und 2 484 483. Die genannten Lösungsmittel weisen zumindest einen der folgenden Nachteile auf:
- sie zersetzen sich bei der für den Lösungsvorgang erforderlichen hohen Temperatur von > 200 °C;
- ihre Zersetzungsprodukte führen zu Verfärbungen beim Erhitzen zwecks Entfernung des Lösungsmittels aus dem Copolymeren;
- diese Zersetzungsprodukte sind aus den Lösungen nur schwer oder überhaupt nicht entfernbar und verschlechtern so die Eigenschaften von Erzeugnissen, die aus diesen Lösungen hergestellt werden;
- sie lösen bestimmte Copolymere des Typs TFE/E sehr schlecht oder überhaupt nicht.

Aus der PCT-Offenlegungsschrift 81/01158 ist ferner bekannt, daß man perfluorierte Copolymere mit Ionenaustauscher-Gruppen (Sulfonyl- oder Carboxylgruppen) unter anderem in niedermolekularen Oligomeren oder Telomeren des Chlortrifluorethylens zwecks Wiederaufarbeitung auflösen kann. Solche Copolymere mit funktionellen Gruppen sind dem Fachmann als gut löslich in vielerlei Lösungsmitteln bekannt; dies erlaubt keine Rückschlüsse auf ausgesprochen schwer lösliche Copolymere, wie diejenigen vom Typ TFE/E.

Zur Vermeidung der obengenannten Nachteile stellt die vorliegende Erfindung Lösungen der eingangs genannten Copolymeren zur Verfügung, die dadurch gekennzeichnet sind, daß sie als Lösungsmittel niedrigmolekulare Polymere des Chlortrifluorethylens von öl- oder wachsartiger Konsistenz mit einem Siedepunkt von 150 bis 350 °C und einem Schmelzpunkt von ≦ 80 °C enthalten und, die Copolymeren in einer Konzentration von bis zu 30 Gew.-% vorliegen.

Vorzugsweise werden als Lösungsmittel eingesetzt niedrigmolekulare Polymere des Chlortrifluorethylens von ölartiger Konsistenz mit einem Siedepunkt von 210 bis 300 °C.

Diese als Lösungsmittel eingesetzten niedrigmolekularen Polymere sind Oligomere oder Telomere des Polychlortrifluorethylens. Sie besitzen die Konsistenz von Ölen mit relativ hohen Siedepunkten von 150 bis 350 °C, vorzugsweise von 210 bis 300 °C (jeweils bei normalem Druck), oder von niedrigschmelzenden Wachsen mit einem Schmelzpunkt von ≦ 80 °C, vorzugsweise ≦ 50 °C. Derartige kurzkettige, niedrigmolekulare Polymere werden entweder durch Kettenabbau oder durch Kettenaufbau gewonnen. Ersteres ist die wohlbekannte Pyrolyse des Polychlortrifluorethylens, wie beispielsweise beschrieben in den US-Patentschriften 2 854 490 und 2 969 403. Der Kettenaufbau zu niedrigmolekularen Polymeren kann erfolgen durch Telomerisation des Chlortrifluorethylens in Gegenwart von Telogenen, wie zum Beispiel Chloroform, Chlorfluoralkane, Chlorfluoralkaniodide, Chlorfluoralkanbromide und ähnliche, wie beispielsweise beschrieben in der GB-PS 927 403 oder in den US-Patentschriften 2 694 701, 2 700 661, 2 875 253 und 2 922 824. Schließlich gelingt es auch, solche Oligomere herzustellen durch Polymerisation von Chlortrifluorethylen unter bestimmten kontrollierten Bedingungen, beispielsweise in Gegenwart bestimmter Peroxide. Solche Verfahren sind unter anderem bekannt aus der US-PS 2 705 706 und der GB-PS 796 326.

Fluorchlorcarbonöle sind auch als Handelsprodukte bekannt unter dem Handelsnamen "®Halocarbon Oils" der Firma Halocarbon Products Corp., Hackensack, New Jersey, USA und unter dem Handelsnamen "®Fluorolube" der Firma Hooker Chemical Corp., Niagara Falls, USA.

Die Herstellung der Lösungen erfolgt in üblicher und bekannter Weise durch Auflösen des Copolymeren bei erhöhten Temperaturen von ≧ 150 °C bis zum Siedepunkt des Lösungsmittels, vorzugsweise bei Temperaturen von 100 bis 10 °C unterhalb des Siedepunktes des jeweiligen Lösungsmittels. Gegebenenfalls kann leicht erhöhter Druck angewendet werden, beispielsweise um zu hohe Lösungsmittelverluste nahe dem Siedepunkt zu vermeiden. Vorzugsweise erfolgt das Auflösen aber bei Normaldruck. Soweit Festkörper mit bei Raumtemperatur wachsartiger Konsistenz als Lösungsmittel dienen, ist es zweckmäßig, diese vor dem Auflösen des Copolymeren durch Erwärmen in den flüssigen Zustand zu überführen. Das Auflösen erfolgt zweckmäßigerweise unter mechanischer Durchmischung, wie Rühren, Schütteln und dergleichen, wobei das Copolymere in möglichst feinverteilter oder feinzerkleinerter Form vorliegen soll. Die Konzentration der erhaltenen Lösungen reicht (von 0,05) bis zu 30 Gew.-% des Copolymeren. Bei feiner Verteilung geht der Lösevorgang rasch vonstatten. Es ist auch möglich, gröbere Verteilungsformen zu lösen, beispielsweise Schmelzgranulat, jedoch wird hier der Lösevorgang länger dauern. Beim Abkühlen auf Raumtemperatur wird die niedrigviskose Lösung zu einem hochviskosen, nicht mehr fließfähigen Gel; in Falle von bei Raumtemperatur wachsartigen Chlortrifluorethylen-Polymeren tritt eine Verfestigung ein. Dieser Vorgang der Gelierung beziehungsweise Verfestigung ist vollständig reversibel.

Die als Lösungsmittel eingesetzten niedrigmolekularen Chlortrifluorethylen-Polymeren können durch Verdampfen, in zweckmäßiger Weise unter vermindertem Druck, oder durch Extrahieren mit organischen Lösungsmitteln, wie beispielsweise niedrigsiedenden Alkanen oder Chlorfluorkohlenstoffen oder -kohlenwasserstoffen aus dem geformten Erzeugnis entfernt werden.

Unter den gemäß der Erfindung gelösten Copolymeren des Typs TFE/E sind solche zu verstehen, die
a) höchstens 60 (und mindestens 30) Mol-% an copolymerisierten Einheiten des Tetrafluorethylens und
b) 60 bis 40 Mol-% an copolymerisierten Einheiten des Ethylens sowie
c) zusätzlich 0 bis 15 Mol-%, vorzugsweise bis zu 8 Mol-%, mindestens eines weiteren α-olefinischen Comonomeren, ausgewählt aus den untengenannten Gruppen, enthalten, wobei die untere Grenze des Gehaltes eines solchen oder solcher weiterer Monomerer bei 0,05, vorzugsweise bei 0,5 Mol-%, liegt, wenn eines oder mehrere solcher weiterer Monomerer gegebenenfalls anwesend sind, das heißt Ter- und Quaterpolymere oder Copolymere noch höherer Ordnung vorliegen. Die Terpolymeren können neben Ethylen und Tetrafluorethylen noch α-olefinische Monomeren, ausgewählt aus den folgenden Gruppen, in den genannten Anteilen enthalten:
   c₁) perfluorierte Olefine der Formel CF₂=CF-Rf1, worin Rf1 ein Perfluoralkylrest mit 1 bis 10, vorzugsweise mit 1 bis 5 C-Atomen ist, bevorzugt ist vor allem Hexafluorpropylen (HFP);
   c₂) perfluorierte Vinylether der Formel CF₂=CF-O-Rf2, worin Rf2 ein Perfluoralkylrest mit 1 bis 10, vorzugsweise 1 bis 4 C-Atomen ist. Zu nennen sind der Perfluorethyl-, Perfluor-n-butyl- und insbesondere der Perfluor-n-propyl-Rest (PPVE);
   c₃) perfluorierte Vinylether der Formel 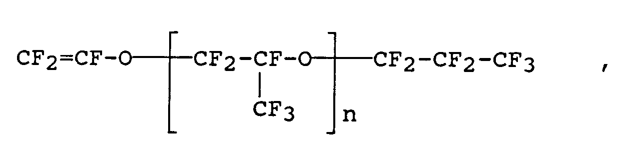 worin n = 1 bis 4, vorzugsweise 1 oder 2 ist;
   c₄) perfluorierte Vinylether der Formel 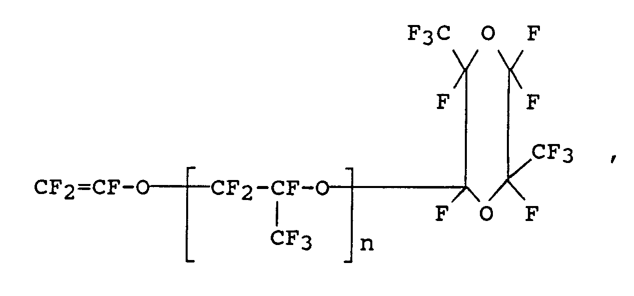 worin n = 0 bis 1, vorzugsweise 0 ist;
   c₅) Perfluor-2-methylen-4-methyl-1,3-dioxolan;
   C₆) perfluoralkylsubstituierte Vinylverbindungen der Formel CH₂=CH-Rf3, worin Rf3 ein Perfluoralkylrest mit 2 bis 10, vorzugsweise 2 bis 6 C-Atomen ist;
   c₇) fluorhaltige Olefine der Formel CH₂=CRf4-Rf3, worin Rf4 = F oder CF₃ und Rf3 ein Perfluoralkylrest mit 1 bis 10, vorzugsweise 1 bis 6 C-Atomen ist, insbesondere das 3,3,3-Trifluor-2-trifluormethylpropylen;
   c₈) 1,1,1-Trifluor-2-(trifluormethyl)-4-penten-2-ol 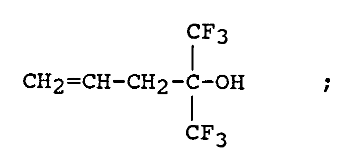
   c₉) Allyl-1-hydroxy-hexafluorisopropylether 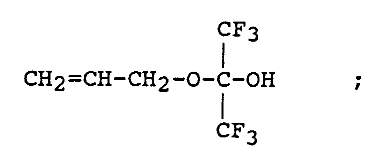
   c₁₀) Verbindungen der allgemeinen Formel CH₂=CH-(CH₂)ₙ-O-CF₂-CFX₃H, worin X₃ = F, Cl oder Trifluormethyl, vorzugsweise F, und n Null oder 1 ist;
   c₁₁) α-Olefine mit 3 bis 4 C-Atomen, vorzugsweise Isobutylen;
   c₁₂) Vinylidenfluorid und
   c₁₃) Trifluorchlorethylen.

Bevorzugte Termonomere (neben Tetrafluorethylen und Ethylen) sind in diesen Terpolymeren die obengenannten Monomeren der Gruppe c₁), c₂), c₃), c₄), c₇), c₁₀) und c₁₃) und davon insbesondere deren als bevorzugt genannte Vertreter.

Die erfindungsgemäß gelösten Copolymeren können auch Quaterpolymere oder Copolymere noch höherer Ordnung sein, die zwei oder mehrere der unter c₁) bis c₁₃) genannten Monomeren im Gemisch enthalten. Bevorzugt sind Quaterpolymere, die neben Tetrafluorethylen/Ethylen/Hexafluorpropylen noch ein Monomeres aus den obengenannten Gruppen c₁) bis c₁₃) enthalten, insbesondere Perfluor(propylvinyl)ether.

Die Copolymeren aus nur TFE/E sind seit langem bekannt aus der US-PS 2 468 664. Terpolymere der obengenannten Arten sind beschrieben in den US-Patentschriften 2 468 664, 3 817 951, 3 960 825, 3 624 250, 3 450 684, 4 013 689, 4 123 602, 3 847 881, 2 975 161, 3 303 154 und in der GB-PS 1 355 595. Die genannten Quaterpolymeren sind beispielsweise beschrieben in der US-PS 4 381 387. Sie bestehen aus 55 bis 30 Mol-%, vorzugsweise 55 bis 40 Mol-%, an copolymerisierten Einheiten des Tetrafluorethylens, 60 bis 40 Mol-%, vorzugsweise 55 bis 45 Mol-%, an copolymerisierten Einheiten des Ethylens, 10 bis 1,5 Mol-%, vorzugsweise 8 bis 3 Mol-% und insbesondere 5 bis 3 Mol-% an copolymerisierten Einheiten des Hexafluorpropylens sowie 2,5 bis 0,05 Mol-%, vorzugsweise 1 bis 0,1 Mol-% und insbesondere 0,8 bis 0,2 Mol-% an copolymerisierten Einheiten, des weiteren Monomeren aus den obengenannten Gruppen c₁) bis c₁₃), wobei sich die 4 Bestandteile jeweils auf 100 Mol-% ergänzen.

Die erfindungsgemäßen Lösungen finden Anwendung für die Herstellung von Gießfilmen. Dabei werden diese Lösungen bei erhöhten Temperaturen auf eine, zweckmäßigerweise heiße, Unterlage vergossen. Das Lösungsmittel wird verdampft oder durch Anlegen von Vakuum entfernt. Nach Abziehen von der Unterlage resultiert ein freitragender, weitgehend transparenter Film.

Ferner können aus solchen Lösungen Beschichtungen und Imprägnierungen hergestellt werden, wobei der Beschichtungsvorgang der gleiche ist wie bei der Herstellung von Gießfilmen. Es kommen Verfahren wie Heißspritzen, Tauchen und dergleichen in Frage.

So können Netze, Gewebe, Vliese, Oberflächen aus porösen Materialien wie Sintermetalle oder Keramik oder auch metallische Substrate beschichtet werden. Im letzteren Fall ist es zweckmäßig, vorher haftvermittelnde Schichten anzubringen. Auch zur Reparatur von Löchern, Rissen etc. in Filmen aus Copolymeren des Typs TFE/E können diese eingesetzt werden.

Insbesondere finden diese Lösungen Anwendung für den sogenannten Gel-Spinnprozeß und machen so die Copolymeren vom Typ TFE/E diesem Prozeß zugänglich und eröffnen die Möglichkeit der Herstellung von hochfesten Fasern und Fäden aus diesen Werkstoffen. Schließlich ist an solchen Lösungen eine genauere Bestimmung von physikalischen Eigenschaften (Molekulargewicht, Lichtstreuung, Struktur) möglich.

Die Erfindung wird durch folgende Beispiele erläutert:

### Beispiele 1 bis 6

In einem 100-ml-Dreihalskolben werden 47,5 g (Beispiel 1 48,2 g) eines niedermolekularen Chlortrifluorethylen-Polymeren (®Halocarbonöl 27 S der Firma Halocarbon Products) mit einem Siedebereich von 270 bis 290 °C als Lösungsmittel und 2,5 g (Beispiel 1 1,8 g) des jeweiligen, vorher gemahlenen Copolymerpulvers im Ölbad unter Rühren und unter Stickstoffabdeckung auf 250 bis 260 °C erhitzt (Temperatur des Ölbades 260 bis 270 °C). Bei der Lösetemperatur von 240 bis 250 °C entsteht zunächst ein hochviskoses Quellprodukt, dessen Viskosität im weiteren Verlauf des Lösevorgangs bis zur vollständigen Homogenisierung wieder abnimmt. Die Viskositäten der homogenisierten Lösungen bei einer Temperatur von 260 °C, gemessen mit einem Rotationsviskosimeter RV 20 mit einer Hochtemperatur-Meßeinrichtung ME 500, der Firma Haake, Karlsruhe, Bundesrepublik Deutschland, sind in der folgenden Tabelle angegeben:

| Beispiel | Comonomere in Copolymeren [Mol-%] | | | | Konz. [Gew.-%] | Nullscherviskosität [Pa s] |
|---|---|---|---|---|---|---|
| | TFE | E | HFP | PPVE | | |
| 1 | 50 | 50 | - | - | 3,6 | 43 |
| 2 | 49,0 | 49,8 | - | 1,2 | 5 | 3,6 |
| 3 | 50,0 | 49,4 | - | 0,6 | 5 | 3,6 |
| 4 | 48,0 | 47,8 | 4,2 | - | 5 | 2,9 |
| 5 | 49,0 | 45,8 | 5,2 | - | 5 | 8,7 |
| 6 | 48,0 | 47,0 | 1,6 | 3,4 | 5 | 50 |

Beim Abkühlen auf Raumtemperatur erstarren alle diese Lösungen zu nicht fließfähigen Gelen. Dieser Vorgang kann jedoch durch Erhitzen vollständig wieder reversibel gemacht werden.

### Beispiel 7

10 g eines Copolymeren, enthaltend an copolymerisierten Einheiten 48 Mol-% TFE, 42 Mol-% E und 10 Mol-% HFP, das einen Schmelzindexwert von 56, gemessen bei 300 °C und 11 kg Belastung, aufweist, werden bei 165 °C in 100 g eines niedermolekularen Chlortrifluorethylen-Polymeren (®Halocarbonöl 6,3 S) mit einem Siedebereich von 220 bis 240 °C 4 Stunden lang gerührt. Man erhält eine völlig klare, leicht dickflüssige Lösung. Die Lösung wird auf eine heiße Glasplatte gegossen, und nach Verteilung wird das Lösungsmittel in der Hitze und unter vermindertem Druck (15 mbar) abgedampft. Man erhält einen glatten, transparenten, freitragenden Gießfilm.

### Beispiel 8

15 g eines Copolymeren, enthaltend an copolymerisierten Einheiten 48 Mol-% TFE, 48 Mol-% E und 4 Mol-% HFP, das einen Schmelzindexwert von 35, gemessen bei 300 °C und 11 kg Belastung, aufweist, werden bei 230 °C in 100 g eines niedermolekularen Chlortrifluorethylen-Polymeren (®Halocarbonöl 27 S der Firma Halocarbon Products) mit einem Siedebereich von 270 bis 290 °C 5 Stunden lang gerührt. Man erhält eine absolut klare, farblose, dickflüssige Lösung. Mit dieser Lösung wird ein Gewebe beschichtet, das aus Fasern eines Copolymeren aus Tetrafluorethylen/Hexafluorpropylen besteht.

Nach dem Abdampfen des Lösungsmittels in der Hitze und unter vermindertem Druck (15 mbar) erhält man ein porenfreies beschichtetes Gewebe.

## Patentansprüche

1. Lösungen von Copolymeren, bestehend aus
a) höchstens 60 Mol-% an copolymerisierten Einheiten des Tetrafluorethylens,
b) 60 bis 40 Mol-% an copolymerisierten Einheiten des Ethylens und
c) 0 bis 15 Mol-% an copolymerisierten Einheiten mindestens eines weiteren α-olefinischen Comonomeren, ausgewählt aus den folgenden Gruppen:
c₁) perfluorierte Olefine der Formel CF₂=CF-Rf1, worin Rf1 ein Perfluoralkylrest mit 1 bis 10 C-Atomen ist;
c₂) perfluorierte Vinylether der Formel CF₂=CF-O-Rf2, worin Rf2 ein Perfluoralkylrest mit 1 bis 10 C-Atomen ist;
c₃) perfluorierte Vinylether der Formel 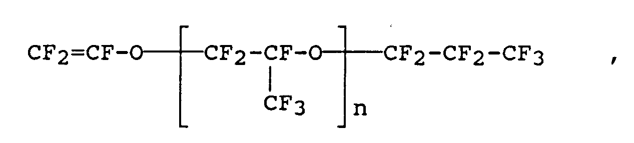 worin n = 1 bis 4 ist;
c₄) perfluorierte Vinylether der Formel 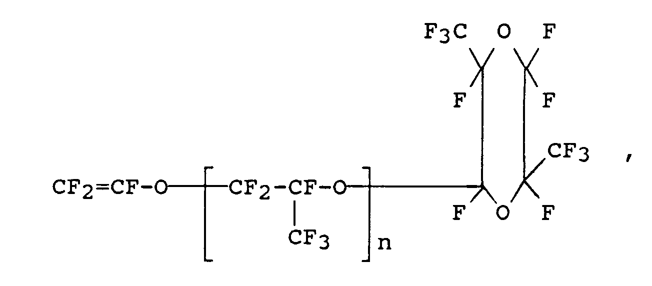 worin n = 0 bis 1 ist;
c₅) Perfluor-2-methylen-4-methyl-1,3-dioxolan;
C₆) perfluoralkylsubstituierte Vinylverbindungen der Formel CH₂=CH-Rf3, worin Rf3 ein Perfluoralkylrest mit 2 bis 10 C-Atomen ist;
c₇) fluorhaltige Olefine der Formel CH₂=CRf4-Rf3, worin Rf4 = F oder CF₃ und Rf3 ein Perfluoralkylrest mit 1 bis 10 C-Atomen ist;
c₈) 1,1,1-Trifluor-2-(trifluormethyl)-4-penten-2-ol 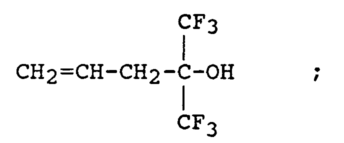
c₉) Allyl-1-hydroxy-hexafluorisopropylether 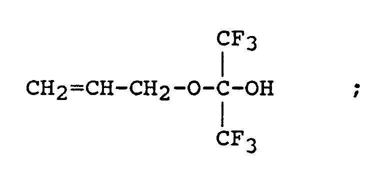
c₁₀) Verbindungen der allgemeinen Formel CH₂=CH-(CH₂)ₙ-O-CF₂-CFX₃H, worin X₃ = F, Cl oder Trifluormethyl und n Null oder 1 ist;
c₁₁) α-Olefine mit 3 bis 4 C-Atomen;
c₁₂) Vinylidenfluorid und
c₁₃) Trifluorchlorethylen,
in hochsiedenden Lösungsmitteln, dadurch gekennzeichnet, daß sie als Lösungsmittel niedrigmolekulare Polymere des Chlortrifluorethylens von öl- oder wachsartiger Konsistenz mit einem Siedepunkt von 150 bis 350 °C und einem Schmelzpunkt von ≦ 80 °C enthalten und die Copolymeren in einer Konzentration von bis zu 30 Gew.-% vorliegen.

2. Lösungen von Copolymeren gemäß Anspruch 1, dadurch gekennzeichnet, daß sie als Lösungsmittel niedrigmolekulare Polymere des Chlortrifluorethylens von ölartiger Konsistenz mit einem Siedepunkt von 210 bis 300 °C enthalten.

3. Verwendung der Lösungen gemäß Anspruch 1 und 2 zur Herstellung von Fasern und Fäden nach dem Gel-Spinnprozeß.

## Claims

1. A copolymer solution comprising
a) at most 60 mol % of copolymerized units of tetrafluoroethylene,
b) from 60 to 40 mol % of copolymerized units of ethylene, and
c) from 0 to 15 mol % of copolymerized units of at least one further α-olefinic comonomer selected from the following groups:
c₁) perfluorinated olefins of the formula CF₂=CF-Rf1, in which Rf1 is a perfluoroalkyl radical having 1 to 10 carbon atoms;
c₂) perfluorinated vinyl ethers of the formula CF₂=CF-O-Rf2, in which Rf2 is a perfluoroalkyl radical having 1 to 10 carbon atoms;
c₃) perfluorinated vinyl ethers of the formula 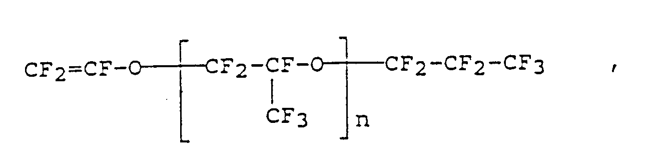 in which n is 1 to 4;
c₄) perfluorinated vinyl ethers of the formula 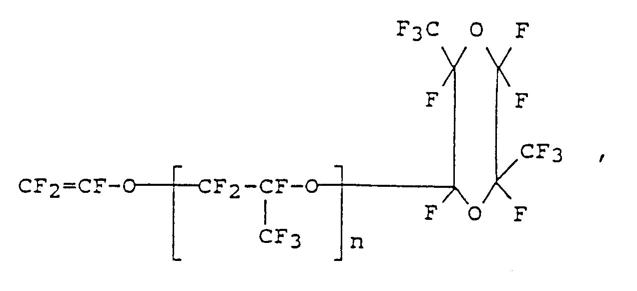 in which n is 0 to 1;
c₅) perfluoro-2-methylene-4-methyl-1,3-dioxolane;
c₆) perfluoroalkyl-substituted vinyl compounds of the formula CH₂=CH-Rf3, in which Rf3 is a perfluoroalkyl radical having 2 to 10 carbon atoms;
c₇) fluorine-containing olefins of the formula CH₂=CRf4-Rf3, in which Rf4 is F or CF₃ and Rf3 is a perfluoroalkyl radical having 1 to 10 carbon atoms;
c₈) 1,1,1-trifluoro-2-(trifluoromethyl)-4-penten-2-ol 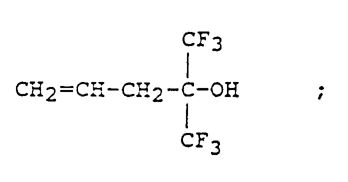
c₉) allyl 1-hydroxyhexafluoroisopropyl ether 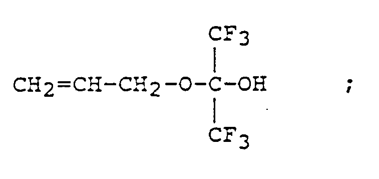
c₁₀) compounds of the formula CH₂=CH-(CH₂)ₙ-O-CF₂-CFX₃H, in which X₃ is F, Cl or trifluoromethyl, and n is zero or 1;
c₁₁) α-olefins having 3 to 4 carbon atoms;
c₁₂) vinylidene fluoride and
c₁₃) trifluorochloroethylene,
in high-boiling solvents, wherein the solvents are low-molecular-weight polymers of chlorotrifluoroethylene having an oil- or wax-like consistency and a boiling point of from 150 to 350 °C and a melting point of ≦ 80 °C, the copolymers being in a concentration of up to 30 % by weight.

2. A copolymer solution as claimed in claim 1, wherein the solvents are low-molecular-weight polymers of chlorotrifluoroethylene having an oil-like consistency and a boiling point of from 210 to 300 °C.

3. The use of a solution as claimed in claim 1 or 2 for the production of fibers and filaments by gel spinning.

## Revendications

1. Solution de copolymères, consistant en :
(a) 60 moles %, au maximum, de motifs copolymérisés du tétrafluoréthylène,
(b) 60 à 40 moles % de motifs copolymérisés de l'éthylène et,
(c) 0 à 15 moles % de motifs copolymérisés d'au moins un autre comonomère α-oléfinique, choisi parmi les ensembles suivants :
(c₁) des oléfines perfluorées de formule CF₂=CF-R_{f}1, formule dans laquelle R_{f}1 représente un reste perfluoralkyle ayant 1 à 10 atomes de carbone
(c₂) des éthers vinyliques perfluorés de formule CF₂=CF-O-R_{f}₂, dans laquelle R_{f}₂ représente un reste perfluoralkyle ayant 1 à 10 atomes de carbone
(c₃) des éhers vinyliques perfluorés de formule 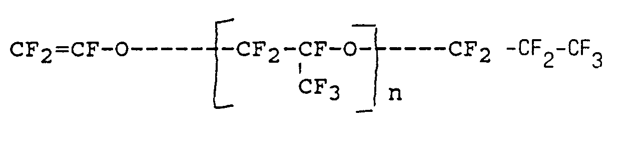 dans laquelle n vaut 1 à 4;
(c₄) des éthers vinyliques perfluorés de formule 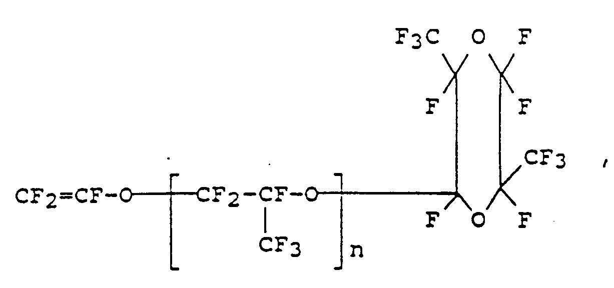 dans laquelle N vaut 0 à 1;
c₅) du perfluoro-2-méthylène-4-méthyl-1,3-dioxolane;
(c₆) des composés vinyliques perfluoroalkylés, de formule CH₂=CH-Rf3, dans laquelle Rf3 représente un reste perfluoralkyle ayant 2 à 10 atomes de carbone ;
(c₇) des oléfines fluorés de formule CH₂=CRf4-Rf3, dans laquelle Rf4 représente F ou CF₃, et Rf3 représente un reste perfluoralkyle ayant 1 à 10 atomes de carbone;
(c₈) le 1,1,1-trifluoro-2-(trifluorométhyl)-4-pentène-2-ol 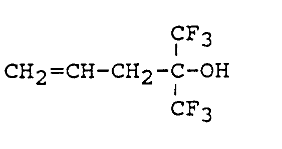
(c₉) l'éther d'allyle et de 1-hydroxyhexafluorisopropyle : 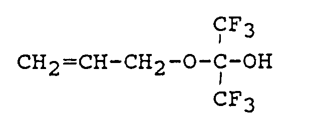
c₁₀) des composés de formule générale : CH₂=CH-(CH₂)ₙ-O-CF₂-CFX₃H, dans laquelle X₃ représente F, Cl ou un groupe trifluorométhyle et n est nul ou vaut 1;
c₁₁) des α-oléfines comportant 3 à 4 atomes de carbone;
(c₁₂) le fluororure de vinylidène, et
(c₁₃) le trifluorochloréthylène,
dans des solvants à point élevé d'ébullition, caractérisée en ce qu'elle contient comme solvant des polymères à bas poids moléculaire du chlorofluoréthylène de consistance huileuse ou cireuse, ayant un point d'ébullition de 150 à 350°C et un point de fusion inférieur ou égal à 80°C, et en ce que les copolymères sont présents en une concentration allant jusqu'à 30 % en poids.

2. Solutions de copolymères selon la revendication 1, caractérisées en ce qu'elles contiennent comme solvants des polymères à bas poids moléculaire du chlorotrifluoréthylène, de consistance huileuse, ayant un point d'ébullition de 210 à 300°C.

3. Utilisation de solutions selon les revendications 1 et 2 pour préparer des fibres et des fils selon le procédé de filage de gel.
